# EUROPEAN PATENT APPLICATION

(11) **EP 1 559 602 A2**
(43) Date of publication of application: **03.08.2005**
(21) Application number: 05001637.7
(22) Date of filing: 27.01.2005
(51) Int. Cl.: B60J 11/00

(54) **Inflatable device designed to protect motor vehicles against hail**

(30) Priority: 30.01.2004 IT MI20040035 U
(71) Applicant: Trideax S.r.l., 20030 Bovisio Masciago (MI) (IT)
(72) Inventor: Soggiu, Giovanni, 20051 Limbiate (MI) (IT)
(74) Representative: Savi, Alberto

(57) **Abstract**

This invention relates to a fast-acting device designed to protect vehicles against hail, of the type comprising an inflatable cover which is laid on the bodywork of said vehicles and secured to the bodywork with fixing means, characterised in that it includes a compressor (3) which is connected to said cover (2) and driven by an electric motor powered by the electrical installation of the vehicle.

Said device is also characterised in that said compressor (3) is connected to said cover (2) in a location close to the window of the vehicle so that said compressor (3) can be activated from inside the vehicle.

## Description

This invention relates to an inflatable device designed to protect motor vehicles against hail.

If hail is particularly violent, it can seriously damage the bodywork of a vehicle, because it can cause a large number of small dents all over the bodywork. Moreover, hailstorms often begin suddenly, and there is little time to protect the vehicle even if a suitable device is available.

Various methods of protecting vehicle bodywork exist. One such method is described in patents EP 2585293 and DE 3512271, which disclose a protective covering constituted by a tarpaulin made, for example, of plastic, which is laid on the vehicle and spaced from the vehicle surface by flexible foam polymer rollers. Another method is described in patents US 5890525 and US 5242206, which disclose a protective covering constituted by an inflatable cover that is laid on the bodywork.

However, the majority of known devices are unsuitable to offer protection in an emergency situation, as a relatively long time is required to position them.

Another drawback is that said known devices are usually heavy and/or cumbersome, with the result that a considerable effort, which not everyone is able to make, is required to position them, and they also take up a great deal of room in the boot of the vehicle. Said devices are basically only suitable in the case of protection during a long period of non-use of the vehicle, and are totally impractical for emergency situations such as sudden hailstorms. In this latter case it is necessary to act in a few minutes, ie. in the short period between the time when the first hailstones, which are generally smaller and sparser, begin to fall, and the time when the storm is unleashed, with much larger, more densely packed hailstones.

The device described in patent US 5242206 comes very close to solving this problem, but also presents some problems of inflation, which means that it takes longer to position the cover and is more inconvenient for the driver.

Consequently, one aim of this invention is to provide an improved inflatable vehicle cover which provides the required protection in a very short time with the minimum inconvenience to the driver, and takes up minimal space in the boot of the vehicle.

Said objectives are achieved by a device as claimed in claim 1, which said device is constituted by an inflatable cover designed to be removed from the boot where it was stored, suitably folded, then laid on the vehicle, secured to it with rapid coupling means, and inflated very rapidly, this latter operation being completed from inside the vehicle so that the motorist does not get wetter when the intensity of the hailstorm increases.

The invention will now be described according to a preferred embodiment, with reference to the annexed figures wherein:
- figure 1 shows the device according to the invention fitted to the vehicle in the operational position;
- figure 2 shows a plan view of the device according to the invention;
- figure 3 shows a longitudinal cross-section of the device according to the invention;
- figure 4 (a, b) shows a detail of the means of anchorage to the vehicle according to one variation;
- figure 5 shows the device according to the invention folded ready to be stored in the vehicle boot.

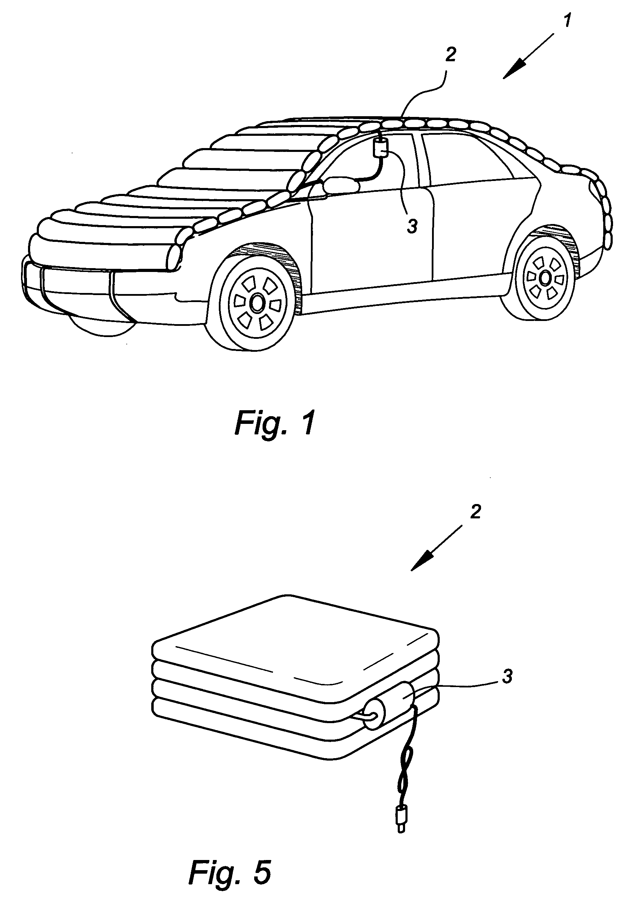

As shown in figure 1, no. (1) indicates the device according to the invention as it appears when it is in the operational position, laid and resting on the vehicle to be protected.

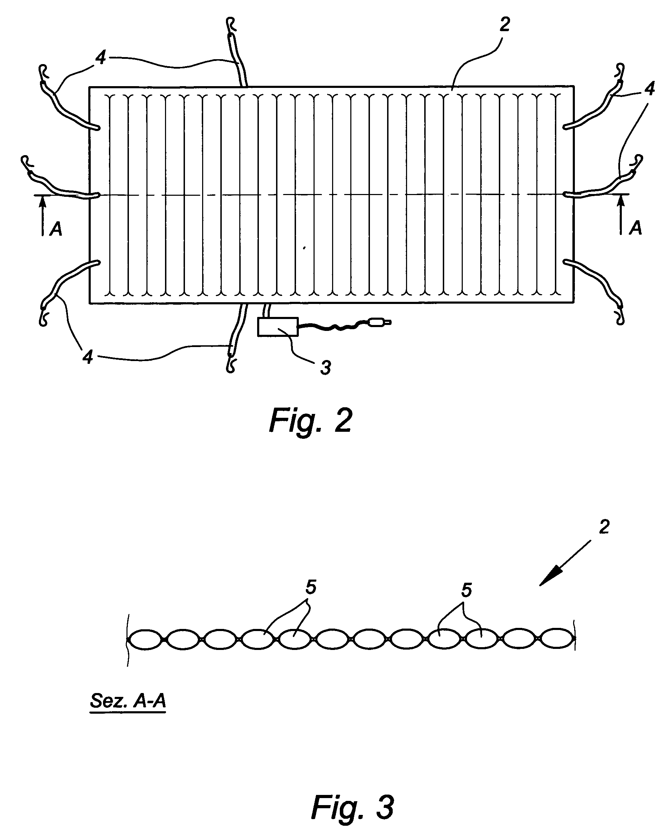

Said device according to the invention, shown in plan view in fig. 2, comprises an inflatable cover (2), a small compressor (3) connected to said cover (2), and fixing means (4) designed to secure said cover (2) to the vehicle to be protected.

Said compressor (3) is driven by an electric motor powered by the car battery through the cigar lighter socket. Moreover, said compressor (3) can conveniently be permanently connected to cover (2), which enables the device to be positioned more quickly (1).

Said fixing means (4) comprise belts fitted with hooks at the ends, which said hooks are designed to hook onto the bumpers and/or bodywork of the vehicle, in particular the wing mirrors, without damaging them. For example, said hooks could conveniently be made of plastic so that they can be hooked onto the bumpers, the edges of the wings and the wing mirrors without scratching the paint.

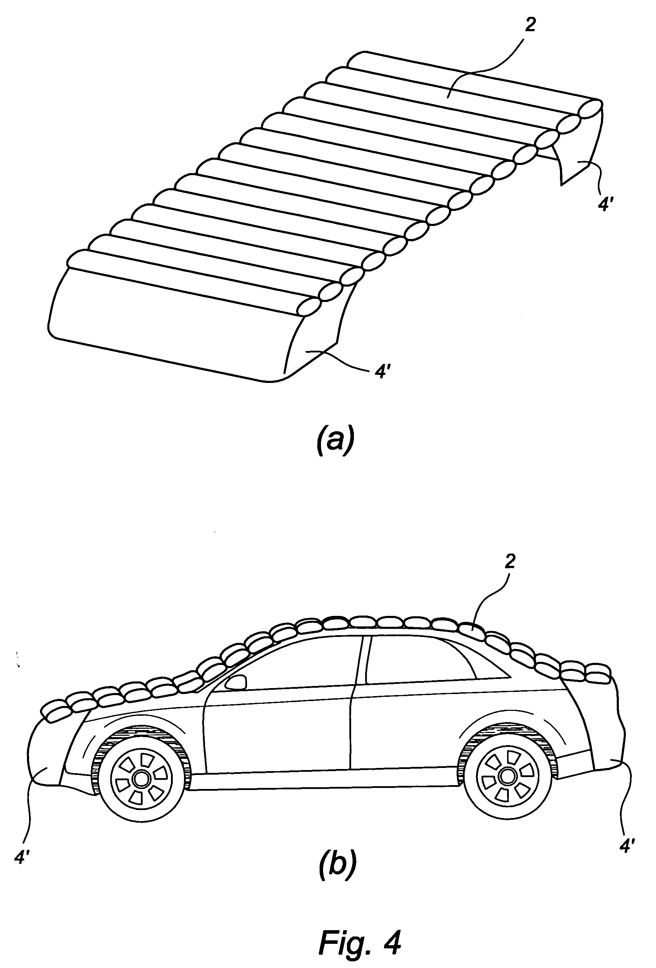

Fig. 3 illustrates cover (2) in a longitudinal cross-section, showing the various air chambers (5), which develop in a direction substantially transverse to the vehicle. The reason for this arrangement is that when the cover is inflated it tends to shorten, so that if it is secured with belts (4) to the front and rear ends of the vehicle, the shortening of the cover during the inflation operation will tend to tauten said belts, thus securing the cover firmly to the vehicle, with no need to tauten said belts separately. In view of this shortening, it may be sufficient to hook the cover only at the ends, ie. only to hook the belts to the bumpers, with the advantage of making the operation faster. The cover could also be hooked onto the wings and wing mirrors, thereby increasing its stability, in the event of strong winds, after hooking it to the vehicle at the ends and starting the inflation operation, so that there is no delay in performing the crucial operations required to protect the bodywork.

According to a second preferred embodiment, said fixing means may take the shape (4') illustrated in fig. 4a, wherein the ends of the cover are shaped so as to envelop the front and rear ends of the vehicle to be protected. It will thus be sufficient to fit said ends over the vehicle and inflate the cover (fig. 4b), thereby automatically securing it in position.

Said compressor (3) will be attached to the cover and conveniently integral with it at the bottom of the cover and in correspondence with the driver's window. Thus, after laying the cover on the vehicle and securing it with fixing means (4) or (4'), the driver can immediately get back into the vehicle, close the door and, through the at least partly lowered window, connect compressor (3) to the cigar lighter socket and inflate the cover.

As the cover inflates, it will shorten, tautening the fixing means and thus remaining secured to the vehicle, even in the presence of high winds.

The cover can subsequently be deflated simply by reversing the direction of rotation of the compressor motor. The compressor then sucks air from the cover, which can be rapidly deflated and folded, as shown in fig. 5, and returned to the boot of the vehicle.

As will clearly appear from the above description, the device according to the invention enables the driver to take rapid action to protect the vehicle from hail with minimal inconvenience.

One skilled in the art could devise various modifications and variations of the device described herein, all of which should be deemed to fall within the ambit of this invention.

## Claims

1. Fast-acting device designed to protect vehicles against hail, of the type comprising an inflatable cover which is laid on the bodywork of said vehicles and secured to the bodywork with fixing means, **characterised in that** it includes a compressor (3) which is connected to said cover (2) and driven by an electric motor powered by the electrical installation of the vehicle.

2. Device as claimed in claim 1, **characterised in that** said compressor (3) is connected to said cover (2) in a location of said cover (2) that in use is close to the window of the vehicle so that said compressor (3) can be activated from inside the vehicle.

3. Device as claimed in claim 2, **characterised in that** compressor (3) is connected to cover (2) in the bottom part of cover (2), namely the part in contact with the bodywork.

4. Device according to at least one of claims 1 to 3, **characterised in that** said compressor (3) is permanently connected to said cover (2).

5. Device as claimed in claim 1, **characterised in that** the direction of rotation of the motor that activates compressor (3) can be reversed so that cover (2) can be rapidly deflated after use.

6. Device as claimed in claim 1, **characterised in that** said electric motor which activates said compressor is powered through the cigar lighter socket.

7. Device as claimed in claim 1, **characterised in that** said fixing means form hoods (4') which envelop the front and rear ends of the vehicle.

8. Device as claimed in claim 1, **characterised in that** said cover (2) presents air chambers (5) which develop in a direction substantially transverse to the longitudinal axis of the vehicle, so as to shorten said cover (2) along the vehicle axis, thus tautening said fixing means (4) and (4').
